# EUROPÄISCHE PATENTSCHRIFT

(11) **EP 1 136 462 B1**
(45) Veröffentlichungstag und Bekanntmachung des Hinweises auf die Patenterteilung: **04.08.2004**
(21) Anmeldenummer: 01106784.0
(22) Anmeldetag: 17.03.2001
(51) Int. Cl.: C04B 41/45, B01J 37/02

(54) **Verfahren zum teilweisen Beschichten eines Tragkörpers**
Process for partially coating of a carrier body
Procédé de revêtement partiel d'un corps de support

(30) Priorität: 23.03.2000 DE 10014547
(43) Veröffentlichungstag der Anmeldung: 26.09.2001
(73) Patentinhaber: Umicore AG & Co. KG, 63457 Hanau-Wolfgang (DE)
(72) Erfinder: Kiessling, Ralph, Dr., 63694 Limeshain (DE); Piroth, Josef, 63875 Mespelbrunn (DE)
(74) Vertreter: Stellbrink, Axel

(56) Entgegenhaltungen:
- EP-A- 0 980 710
- DE-A- 4 040 150
- US-A- 5 422 138
- US-A- 5 866 210

## Beschreibung

Die Erfindung betrifft ein Verfahren zum teilweisen Beschichten eines zylindrischen Tragkörpers mit einer Beschichtungssuspension. Insbesondere betrifft die Erfindung ein Verfahren zum Beschichten von Tragkörpern für Katalysatoren - zum Beispiel Autoabgaskatalysatoren.

Die Tragkörper für Autoabgaskatalysatoren besitzen eine zylindrische Form mit zwei Stirnflächen und einer Mantelfläche und werden von der ersten Stirnfläche zur zweiten Stirnfläche von einer Vielzahl von parallel zur Zylinderachse liegenden Strömungskanälen für die Abgase der Verbrennungskraftmaschinen durchzogen. Diese Tragkörper werden auch als Wabenkörper bezeichnet.

Die Querschnittsform der Tragkörper hängt von den Einbauerfordernissen am Kraftfahrzeug ab. Weit verbreitet sind Tragkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Tragkörper angeordnet. Je nach Anwendungsfall variiert die Kanal- beziehungsweise Zelldichte der Strömungskanäle zwischen 10 und 120 cm⁻². Wabenkörper mit Zelldichten bis zu 250 cm⁻² und mehr sind in der Entwicklung.

Für die Reinigung der Autoabgase werden überwiegend Katalysator-Tragkörper eingesetzt, die durch Extrusion keramischer Massen gewonnen werden. Alternativ dazu stehen Katalysator-Tragkörper aus gewellten und gewickelten Metallfolien zur Verfügung. Für die Abgasreinigung von Personenkraftwagen werden heute noch überwiegend keramische Tragkörper mit Zelldichten von 62 cm⁻² eingesetzt. Die Querschnittsabmessungen der Strömungskanäle betragen in diesem Fall 1,27 x 1,27 mm². Die Wandstärken solcher Tragkörper liegen zwischen 0,1 und 0,2 mm.

Zur Umsetzung der in Autoabgasen enthaltenen Schadstoffe wie Kohlenmonoxid, Kohlenwasserstoffe und Stickoxide in unschädliche Verbindungen werden zumeist feinstverteilte Platingruppenmetalle eingesetzt, die durch Verbindungen von Unedelmetallen in ihrer katalytischen Wirkung verändert sein können. Diese katalytisch aktiven Komponenten müssen auf den Tragkörpern abgeschieden werden. Allerdings ist es nicht möglich, die geforderte feinste Verteilung der katalytisch aktiven Komponenten durch Abscheidung dieser Komponenten auf den geometrischen Oberflächen der Tragkörper zu gewährleisten. Dies gilt in gleicher Weise für die unporösen metallischen wie auch für die porösen keramischen Tragkörper. Eine ausreichend große Oberfläche für die katalytisch aktiven Komponenten kann nur durch Aufbringen einer Trägerschicht aus feinteiligen, hochoberflächigen Materialien auf die Innenflächen der Strömungskanäle zur Verfügung gestellt werden. Dieser Vorgang wird im folgenden als Beschichten des Tragkörpers bezeichnet. Die Beschichtung der äußeren Mantelfläche der Tragkörper ist unerwünscht und sollte zur Vermeidung von Verlusten an wertvollen, katalytisch aktiven Materialien vermieden werden.

Zum Beschichten der Tragkörper dient eine Suspension aus den feinteiligen, hochoberflächigen Materialien in einer flüssigen Phase, zumeist Wasser. Aus dem Stand der Technik sind verschiedene Verfahren zur Abscheidung der Trägerschicht auf den Tragkörpern unter Verwendung der Beschichtungssuspension, beziehungsweise Aufschlämmung, bekannt. Zur Beschichtung können die Tragkörper zum Beispiel in die Beschichtungssuspension getaucht oder mit der Beschichtungssuspension übergossen werden. Weiterhin besteht die Möglichkeit, die Beschichtungssuspension in die Kanäle der Tragkörper zu pumpen oder einzusaugen. In allen Fällen muss überschüssiges Beschichtungsmaterial durch Absaugen oder Ausblasen mit Pressluft aus den Kanälen der Tragkörper entfernt werden. Hierdurch werden auch eventuell mit Beschichtungssuspension verstopfte Kanäle geöffnet.

Nach dem Beschichten werden Tragkörper und Trägerschicht getrocknet und anschließend zur Verfestigung und Fixierung der Trägerschicht auf dem Tragkörper calciniert. Anschließend werden die katalytisch aktiven Komponenten in die Beschichtung durch Imprägnieren mit zumeist wässrigen Lösungen von Vorläuferverbindungen der katalytisch aktiven Komponenten eingebracht. Alternativ hierzu können die katalytisch aktiven Komponenten auch schon der Beschichtungssuspension selbst zugefügt werden. Ein nachträgliches Imprägnieren der fertiggestellten Trägerschicht mit den katalytisch aktiven Komponenten entfällt in diesem Fall.

Ein wesentliches Kriterium der Beschichtungsverfahren ist die mit ihnen in einem Arbeitsgang erreichbare Beschichtungs- oder Beladungskonzentration. Hierunter wird der Feststoffanteil verstanden, der nach Trocknen und Calcinieren auf dem Tragkörper zurückbleibt. Die Beschichtungskonzentration wird in Gramm pro Liter Volumen der Tragkörper angegeben (g/l). In der Praxis werden Beschichtungskonzentrationen bei Autoabgaskatalysatoren bis zu 300 g/l benötigt. Kann diese Menge mit dem verwendeten Verfahren nicht in einem Arbeitsgang aufgebracht werden, so muss der Beschichtungsvorgang nach dem Trocknen und gegebenenfalls Calcinieren des Tragkörpers so oft wiederholt werden, bis die gewünschte Beladung erreicht ist.

Die DE 40 40 150 C2 beschreibt ein Verfahren, mit dem Katalysator-Tragkörper in Wabenform über ihre gesamte Länge gleichmäßig mit einer Trägerschicht, beziehungsweise mit einer katalytisch aktiven Schicht, beschichtet werden können. Im folgenden werden Katalysator-Tragkörper in Wabenform auch als Wabenkörper bezeichnet. Gemäß dem Verfahren der DE 40 40 150 C2 wird die Zylinderachse des Wabenkörpers zur Beschichtung vertikal ausgerichtet. Dann wird die Beschichtungssuspension durch die untere Stirnfläche des Wabenkörpers in die Kanäle eingepumpt, bis sie an der oberen Stirnfläche austritt. Danach wird die Beschichtungssuspension wieder nach unten abgepumpt und überschüssige Beschichtungssuspension aus den Kanälen durch Ausblasen oder Absaugen entfernt, um ein Verstopfen der Kanäle zu vermeiden. Mit diesem Verfahren werden Trägerschichten erhalten, die über die gesamte Länge der Wabenkörper eine gute Gleichmäßigkeit aufweisen.

Die US 4,550,034 und US 4,609,563 beschreiben ein Verfahren zum Beschichten von keramischen Wabenkörpern, wobei eine vorherbestimmte Menge einer Beschichtungssuspension in ein flaches Gefäß eingefüllt und der zu beschichtende Wabenkörper mit einer seiner Stirnflächen in die Suspension getaucht wird. Die vorherbestimmte Menge der Beschichtungssuspension entspricht der gewünschten Beschichtungsmenge für den Wabenkörper. Anschließend wird durch Anlegen eines Vakuums an die zweite Stirnfläche die gesamte Menge der Beschichtungssuspension in die Strömungskanäle des Wabenkörpers eingesaugt. Da die vorherbestimmte Menge der Beschichtungssuspension der benötigten Beschichtungsmenge für den Wabenkörper entspricht, erfolgt nach dem Einsaugen der Beschichtungssuspension kein Entfernen von überschüssiger Beschichtungssuspension aus den Strömungskanälen. Bevorzugt wird die Beschichtung in zwei Schritten vorgenommen, wobei in einem ersten Schritt 50 bis 85% der benötigten Beschichtungsmenge von der ersten Stirnfläche und die restliche Beschichtungsmenge von der zweiten Stirnfläche des Wabenkörpers in die Strömungskanäle eingesaugt wird.

Das von diesen beiden Patentschriften beschriebene Verfahren weist eine hohe Reproduzierbarkeit der Beschichtungskonzentration auf. Allerdings zeigen die so hergestellten Katalysatoren einen starken Gradienten der Dicke der Beschichtung längs des Wabenkörpers. Auch die bevorzugte Beschichtung des Wabenkörpers in zwei Schritten verbessert die Gleichmäßigkeit der Beschichtung längs des Wabenkörpers nicht ausreichend.

Für bestimmte Anwendungsfälle werden Katalysatoren benötigt, die längs des Katalysator-Tragkörpers unterschiedliche katalytisch aktive Bereiche aufweisen. So beschreibt die EP 0 410 440 B 1 einen Katalysator, welcher aus zwei Teilkatalysatoren besteht - einem anströmseitigen Katalysator für die selektive katalytische Reduktion von Stickoxiden mittels Ammoniak oder einer Ammoniak spendenden Verbindung und einem abströmseitigen Oxidationskatalysator, wobei der Oxidationskatalysator als Beschichtung auf einem abströmseitigen Abschnitt des einstückigen als Vollextrudat in Wabenform ausgeführten Reduktionskatalysators aufgebracht ist und der abströmseitige Abschnitt 20 bis 50% des gesamten Katalysatorvolumens ausmacht. Die Aufbringung des Oxidationskatalysators erfolgt durch Eintauchen der Abströmseite des Wabenkörpers bis zur gewünschten Länge in die Beschichtungssuspension für den Oxidationskae talysator.

Die DE 195 47 597 C2 und DE 195 47 599 C2 beschreiben die Verstärkung der Stirnflächen von monolithischen Katalysatoren für die Abgasreinigung durch Auf- oder Einbringen von anorganischen Stoffen, die die mechanischen Eigenschaften der Tragkörper oder der katalytischen Beschichtung verstärken. Die Länge der verstärkten Zone beträgt ausgehend von der jeweiligen Stirnfläche bis zum zwanzigfachen des Kanaldurchmessers. Zur Durchführung dieser Beschichtung wird vorgeschlagen, die Katalysatorkörper in eine Suspension der verstärkenden Stoffe einzutauchen oder diese Suspension auf die Stirnflächen der Körper aufzuspritzen.

Diese Beispiele zeigen, dass ein erheblicher Bedarf an Beschichtungsverfahren zur teilweisen Beschichtung von Wabenkörpern, beziehungsweise Tragkörpern, besteht. Die US 5,866,210 beschreibt ein solches Verfahren. Zum Beschichten wird das Substrat mit einer Stirnfläche in ein Bad mit der Beschichtungssuspension getaucht. Das Bad enthält die Beschichtungssuspension im Überschuss zu der Menge, welche benötigt wird, um das Substrat bis zu einer gewünschten Höhe zu beschichten. Dann wird an die zweite Stirnfläche ein Unterdruck angelegt, dessen Intensität und Zeitdauer genügt, um die Beschichtungssuspension in den Kanälen bis in die gewünschte Höhe zu saugen. Dabei wird eine möglichst gleiche Beschichtungshöhe in allen Kanälen angestrebt.

Der Übergang zwischen dem frisch beschichteten Bereich des Tragkörpers und dem übrigen Bereich des Tragkörpers wird im folgenden als Beschichtungskante bezeichnet.

Das Verfahren gemäß der US 5,866,210 hat mehrere erhebliche Nachteile. Die Höhe der Beschichtung, beziehungsweise ihre axiale Länge, wird durch Ausnutzung von Kapillarkräften und die Höhe des angelegten Unterdruckes und durch die Zeitdauer bestimmt, während der der Unterdruck an die zweite Stirnfläche des Tragkörpers angelegt wird. Für diese Zeitdauer werden 1 bis 3 Sekunden angegeben. Änderungen der Viskosität der Beschichtungssuspension führen damit zu direkten Änderungen der Länge der aufgebrachten Beschichtung und somit zu einer schlechten Reproduzierbarkeit der Beschichtungskante. Die Höhe des Unterdrucks wird in der US-Patentschrift mit maximal einem Zoll Wassersäule angegeben, was etwa 2,5 mbar entspricht. Die genaue Regelung dieses geringen Unterdruckes ist ebenfalls schwierig und kann zu weiteren Problemen bei der Reproduzierbarkeit des Beschichtungsverfahrens führen. Wegen des geringen Unterdruckes können mit diesem Verfahren nur Beschichtungssuspensionen mit niedriger Viskosität verarbeitet werden, was bedeutet, dass diese Suspensionen in der Regel nur einen geringen Feststoffgehalt aufweisen. Der geringe Feststoffgehalt hat wiederum zur Folge, dass zur Aufbringung einer hohen Beladungskonzentration mehrere Beschichtungen nacheinander vorgenommen werden müssen.

In dem Verfahren gemäß der US 5,866,210 spielen die Kapillarkräfte eine wesentliche Rolle. Dies macht das Verfahren abhängig von der Zelldichte der zu beschichtenden Tragkörper.

Nachdem die Beschichtungssuspension in den Strömungskanälen die gewünschte Höhe erreicht hat, wird der Tragkörper bei gleichzeitiger Aufrechterhaltung des Unterdruckes an der zweiten Stirnfläche angehoben und damit der Kontakt zur Beschichtungssuspension unterbrochen. Durch den fortgesetzten Unterdruck an der zweiten Stirnfläche wird Luft durch die Strömungskanäle gesaugt und die Beschichtung zumindest teilweise getrocknet. Während dieser Phase des Beschichtungsprozesses wird der Unterdruck auf 5 bis 15 Zoll Wassersäule erhöht und für weitere 2 bis 4 Sekunden aufrecht erhalten. Durch diese Maßnahme kann die Beschichtungskante verschmiert werden.

Es ist Aufgabe der vorliegenden Erfindung ein Verfahren zur teilweisen Beschichtung von Tragkörpern anzugeben, mit welchem Beschichtungssuspensionen mit hohem Feststoffgehalt eingesetzt werden können, dass eine hohe Reproduzierbarkeit der Lage der Beschichtungskante in den Kanälen ermöglicht und weitgehend unabhängig von der Zelldichte der Tragkörper ist.

Diese Aufgabe wird durch ein Verfahren zum teilweisen Beschichten eines zylindrischen Tragkörpers mit einer Beschichtungssuspension gelöst, wobei der Tragkörper eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen ist. Auf den Tragkörper wird eine gewünschte Beschichtungsmenge der Beschichtungssuspension durch vertikale Ausrichtung der Zylinderachse und Einbringen der Beschichtungssuspension in die Kanäle durch die untere Stirnfläche aufgebracht. Das Verfahren ist dadurch gekennzeichnet, dass der Tragkörper von der unteren Stirnfläche ausgehend mit einem Füllvolumen der Beschichtungssuspension gefüllt wird, welches so bemessen ist, dass der Tragkörper nur bis zu einer Höhe gefüllt wird, welche einen vorherbestimmten Bruchteil seiner Länge L ausmacht und dass überschüssige Beschichtungssuspension nach unten entfernt wird, so dass die gewünschte Beschichtungsmenge auf dem Tragkörper verbleibt.

Wesentlich für das Verfahren ist, dass ein definiertes Füllvolumen der Beschichtungssuspension in die Kanäle des Tragkörpers eingebracht wird. Das Füllvolumen entspricht dem Leervolumen der Kanäle bis zur gewünschten Beschichtungshöhe. Im vorliegenden Verfahren wird also die Beschichtungshöhe durch eine exakte volumetrische Dosierung der Beschichtungssuspension eingestellt, während bei den bekannten Verfahren aus dem Stand der Technik die Beschichtungshöhe nur indirekt durch das Zusammenwirken mehrerer Größen wie Kapillarkräften, Unterdruck und Viskosität bestimmt wird.

Bei der praktischen Durchführung des Verfahrens muss das Füllvolumen um zusätzliche Volumenanteile erhöht werden, die von notwendigen Rohrleitungen und gegebenenfalls weiteren Teilen der zur Durchführung des Verfahrens benötigten Apparatur stammen.

Aus dem Füllvolumen der Beschichtungssuspension ergibt sich die in die Kanäle des Tragkörpers eingebrachte Füllmenge durch Multiplikation mit der Dichte der Beschichtungssuspension. Von der Füllmenge, die über ihr Volumen die Beschichtungshöhe bestimmt, ist die gewünschte Beschichtungsmenge zu unterscheiden, die sich erst nach dem Entfernen überschüssiger Beschichtungssuspension aus den Kanälen des Tragkörpers ergibt. Die in den Tragkörper eingebrachte Menge der Beschichtungssuspension ist also stets größer als die Beschichtungsmenge. Nach dem Entfernen der überschüssigen Beschichtungssuspension wird die Beschichtung getrocknet und gegebenenfalls calciniert.

Das Verfahren wird an Hand der Figuren 1 bis 4 näher erläutert. Es zeigen:
- **Figur 1:**: Vorrichtung zur Durchführung des Verfahrens mit einer reversierbaren Dosierpumpe
- **Figur 2:**: Vorrichtung zur Durchführung des Verfahrens mit einer Dosierpumpe und Absaugen der überschüssigen Beschichtungssuspension
- **Figur 3:**: Vorrichtung zur Durchführung des Verfahrens mit einem Dosierventil und einer Pumpe zum Abpumpen der überschüssigen Beschichtungssuspension
- **Figur 4:**: Vorrichtung zur Durchführung des Verfahrens mit einem Dosierventil und Absaugen der überschüssigen Beschichtungssuspension

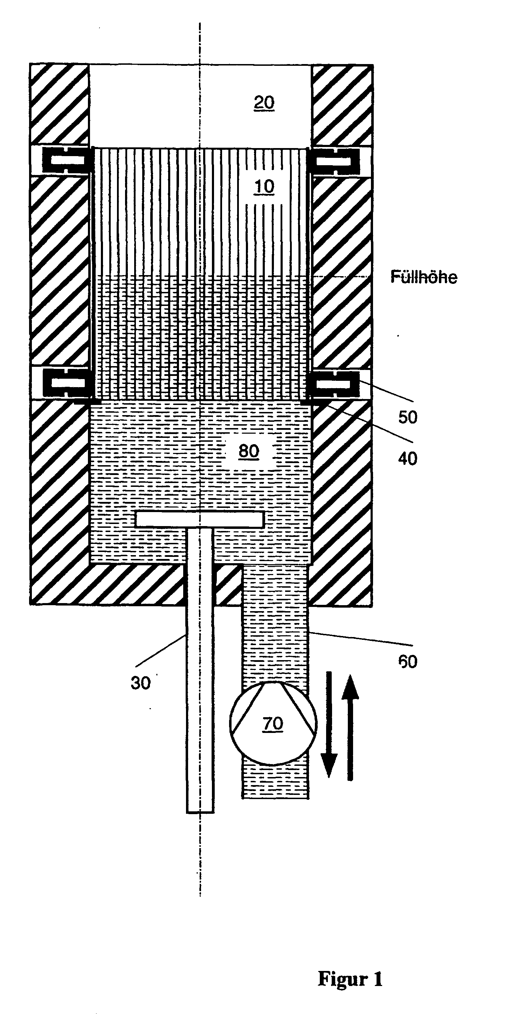

Mit dem Verfahren können sowohl keramische als auch metallische Tragkörper beschichtet werden. Figur 1 zeigt eine mögliche Apparatur zur Durchführung des Verfahrens.

Die Beschichtungsvorrichtung besteht aus einer Tauchkammer (20), in die der zu beschichtende Tragkörper (10) mit Hilfe eines vertikal verschiebbaren Stempels (30) von oben in die Tauchkammer eingeführt und auf den Halteelementen (40) abgesetzt wird. Durch Aufblasen der aufblasbaren Gummimanschetten (50) wird der Tragkörper in der Vorrichtung fixiert. Gleichzeitig dichten diese Manschetten die Mantelfläche des Tragkörpers gegenüber der Beschichtungssuspension ab. Die Tauchkammer kann von unten über die Rohrleitung (60) mit Beschichtungssuspension befüllt und geleert werden. Zum Einbringen der Beschichtungssuspension in die Kanäle des Tragkörpers dient eine reversierbare Dosierpumpe (70), die die Beschichtungssuspension (80) aus einem hier nicht gezeigten Vorratsgefäß in die Tauchkammer pumpt. Mit der Dosierpumpe wird auch die überschüssige Beschichtungssuspension wieder aus den Kanälen entfernt und in das Vorratsgefäß zurückgepumpt. Die Bemessung des Füllvolumens erfolgt also in diesem Fall mit Hilfe der Dosierpumpe.

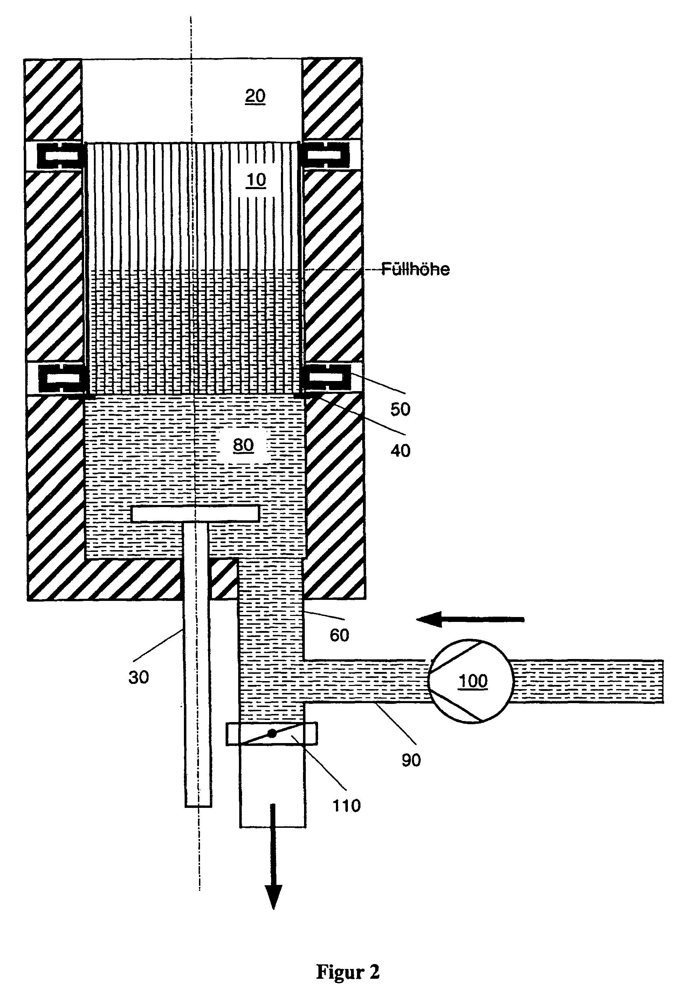

Eine alternative Verfahrensführung ermöglicht die Apparatur von Figur 2. Die Apparatur weist eine zusätzliche Rohrleitung (90) auf, die jetzt mit dem Vorratsgefäß für die Beschichtungssuspension verbunden ist. Die Beschichtungssuspension wird mit Hilfe der Dosierpumpe (100) in die Kanäle des Tragkörpers eingepumpt. Die Bemessung des Füllvolumens erfolgt also auch hier mit Hilfe der Dosierpumpe. Rohrleitung (90) mündet oberhalb einer Drosselklappe (110) in die Rohrleitung (60), die jetzt mit einem nicht gezeigten Unterdruckgefäß mit Demister verbunden ist. Die überschüssige Beschichtungssuspension wird durch Öffnen der Drosselklappe und Absaugen aus den Kanälen des Tragkörpers entfernt. Durch Verwenden von zwei getrennten Rohrleitungen für das Befüllen und Entleeren des Tragkörpers kann in einfacher Weise ein Kreislauf für die Beschichtungssuspension geschaffen werden. Das Unterdruckgefäß ist mit einem Gebläse verbunden, welches einen Unterdruck zwischen 50 und 500, bevorzugt 300 mbar aufrecht erhält. Intensität und Dauer des Absaugens können mit Hilfe der Drosselklappe eingestellt werden. Intensität und Dauer des Absaugens bestimmen unter anderem die auf dem Tragkörper verbleibende Beschichtungsmenge.

Eine verbesserte Reproduzierbarkeit der Beschichtungshöhe läßt sich erreichen, wenn das Füllvolumen mit Hilfe eines Dosierventils bemessen wird, an dessen Eingang die Beschichtungssuspension unter einem Druck ansteht. Das Dosierventil wird aufgrund des Signals eines Sensors gesteuert. Das Signal des Sensors meldet das Erreichen der gewünschten Beschichtungshöhe und steuert das Schließen des Dosierventils. Überschüssige Beschichtungssuspension kann wieder durch Abpumpen oder Absaugen aus den Kanälen des Tragkörpers entfernt werden.

Die bisher beschriebenen Verfahrensvarianten eignen sich sowohl für Tragkörper aus Keramik als auch für Tragkörper aus Metallfolien. Eine besonders vorteilhafte Ausfühningsform der letzten Verfahrensvariante ist für Tragkörper aus Keramik möglich. Das Erreichen der Beschichtungshöhe kann in diesem Fall sehr einfach und genau mit Hilfe eines kapazitiven Sensors gemeldet werden, der in der gewünschten Höhe über der unteren Stirnfläche des Tragkörpers in einem Abstand zur Mantelfläche des Tragkörpers angeordnet ist. Kapazitive Sensoren werden in großem Umfang in der Technik als Näherungsschalter eingesetzt. Der kapazitive Sensor kann in der gewünschten Höhe in einem Abstand von der Mantelfläche des Tragkörpers angeordnet werden. Steigt die Beschichtungssuspension in den Strömungskanälen bis auf diese Höhe, so spricht der Sensor an. Die Ansprechgenauigkeit hängt von der Änderung der Dielektrizitätskonstanten ab. Wird eine wässrige Suspension verwendet, so ist die Ansprechgenauigkeit sehr hoch, da sich in diesem Fall die Dielektrizitätskonstante von 1 (Luft) auf etwa 80 (Wasser) ändert. Die erzielbaren Abschaltgenauigkeiten sind mit einer solchen Sensoranordnung ausgezeichnet.

Der Abstand zwischen der Mantelfläche und dem Sensorkopf sollte im Bereich zwischen 0,5 und 25 mm liegen. Der Tragkörper darf dabei nicht durch eine zwischen der Mantelfläche und dem Sensor liegende Metallfläche abgeschirmt werden. Es empfiehlt sich in diesem Fall, die Halterung für den Tragkörper aus einem Kunststoff zu fertigen. In Versuchen hat sich gezeigt, dass noch außerordentlich gute Abschaltgenauigkeiten erzielt werden, wenn der Abstand zwischen der Mantelfläche des Tragkörpers und dem Sensorkopf 15 mm beträgt. Eine zwischen Mantelfläche und Sensorkopf eingefügte Kunstoffwand hat auf die Abschaltgenauigkeit keinen Einfluss. Diese Tatsache gibt dem Fachmann einen großen Spielraum bei der Konstruktion einer geeigneten Beschichtungsvorrichtung zur Durchführung des Verfahrens.

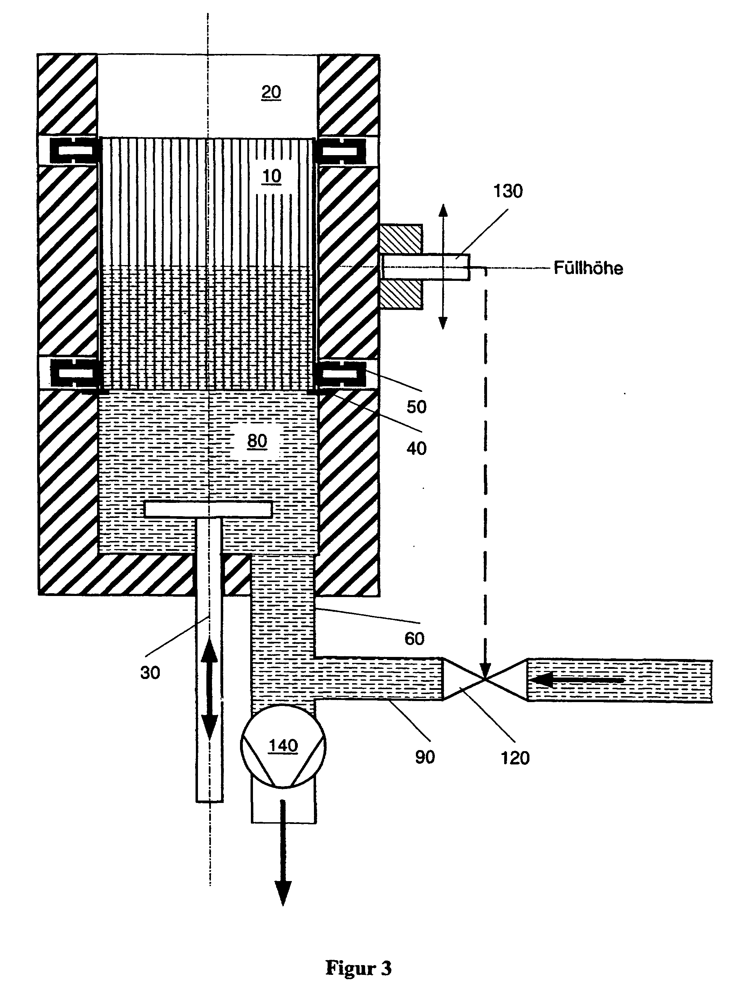

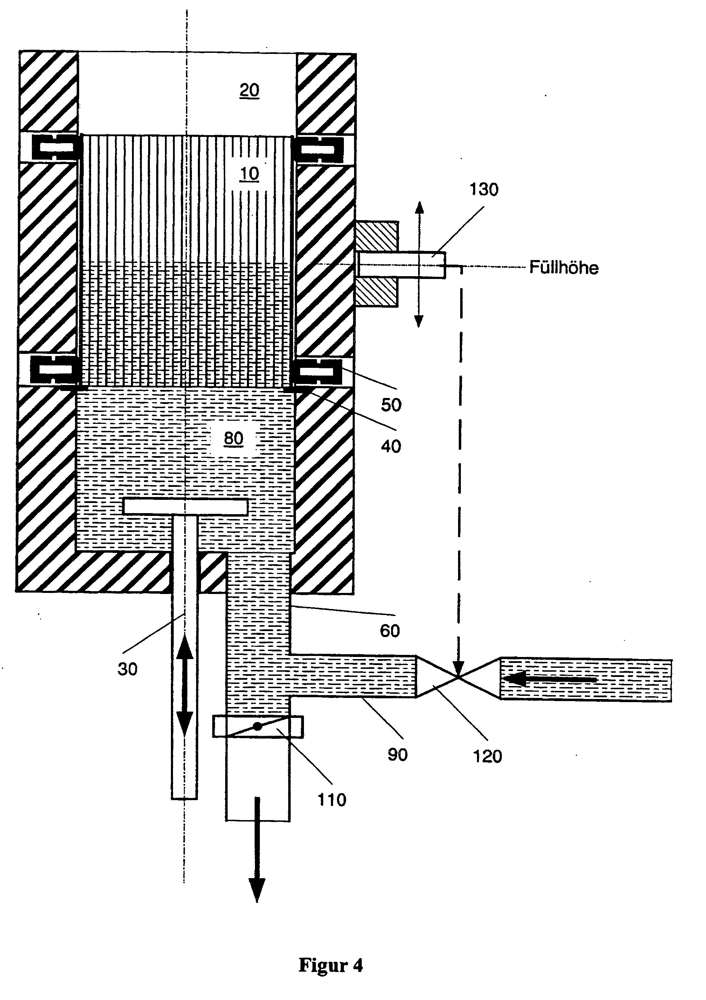

Eine mögliche Apparatur zur Durchführung dieser Verfahrensvariante zeigen die Figuren 3 und 4. In die Rohrleitung (90) ist jetzt ein Dosierventil (120) eingefügt. An der Tauchkammer ist in der gewünschten Beschichtungshöhe der kapazitive Sensor (130) befestigt, der meldet, wenn die Beschichtungssuspension in den Strömungskanälen bis zu dieser Höhe gestiegen ist. Der Sensor ist über eine geeignete Steuerungselektronik mit dem Dosierventil (120) verbunden. Meldet der Sensor das Erreichen der Beschichtungshöhe, so schließt die Elektronik das Dosierventil und schaltet die Pumpe (140) zum Auspumpen der überschüssigen Beschichtungssuspension ein (Figur 3) oder öffnet die Drosselklappe (110), welche wie in Figur 2 mit einem Unterdruckgefäß zum Absaugen der Beschichtungssuspension aus den Kanälen des Tragkörpers verbunden ist (Figur 4).

In allen beschriebenen Verfahrensvarianten wird der Tragkörper nach Entfernen der überschüssigen Beschichtungssuspension aus der Tauchkammer entnommen. In einer weiteren Vorrichtung können eventuell noch mit überschüssiger Beschichtungssuspension verstopfte Strömungskanäle durch erneutes Absaugen oder Ausblasen mit Pressluft geöffnet werden. Absaugen oder Ausblasen erfolgt auch in diesem Fall bevorzugt nach unten, um ein Verschmieren der Beschichtungskante zu vermeiden. Danach werden Tragkörper und Beschichtung getrocknet und calciniert.

Gemäß dem vorgeschlagenen Verfahren wird die Beschichtungssuspension von unten in den Tragkörper zwangsweise eingeführt. Das Befüllen wird erst beendet, wenn das vorgesehene Füllvolumen in den Tragkörper eingebracht ist. Das macht das Verfahren weitgehend unabhängig von der Viskosität der Suspension. Damit können auch hochviskose Beschichtungssuspensionen mit einem hohen Feststoffgehalt eingesetzt werden, so dass die notwendige Beschichtungsdicke mit nur einem Beschichtungsvorgang möglich wird. Die Viskosität der Beschichtungssuspension kann bis 500 mPa.s betragen. Es können Suspensionen mit einem Feststoffgehalt bis 60 Gew.-% verarbeitet werden. Bevorzugt werden Beschichtungssuspensionen mit einem Feststoffgehalt zwischen 40 und 55 Gew.-% eingesetzt. In der Regel ist nur ein Beschichtungsvorgang notwendig, um Beschichtungskonzentrationen nach Calcinierung von bis zu 200 g/l des beschichteten Tragkörpervolumens aufzubringen.

In allen zuvor beschriebenen Ausführungsformen des Verfahrens sollte die Geschwindigkeit, mit der die Beschichtungssuspension in den Tragkörper eingepumpt wird, so bemessen werden, dass die gewünschte Beschichtungshöhe in weniger als einer Sekunde erreicht wird. Dadurch wird der Einfluss der Saugfähigkeit keramischer Tragkörper auf die Ausbildung der Beschichtung minimiert.

### Beispiel:

Folgendes Beispiel soll die für die Erfindung wichtigen Begriffe Füllvolumen, Füllmenge und Beschichtungsmenge verdeutlichen:

Es wurde ein Wabenkörper mit einem Volumen von 1,3 Litern und einer Zelldichte von 62 cm⁻² ausgehend von einer Stirnfläche auf der Hälfte seiner Länge beschichtet.

Das Leervolumen des Tragkörpers (Volumen aller Kanäle) betrug 3/4 des Gesamtvolumens, das heißt etwa 1 Liter. Das benötigte Füllvolumen ohne Berücksichtigung zusätzlicher Volumina von Leitungen und Tauchkammer betrug also 0,5 Liter.

Für die Beschichtung wurde eine Beschichtungssuspension mit einer Dichte von 1,5 kg/l und einem Feststorfgehalt von 50 Gew.-% eingesetzt. Daraus berechnete sich mit dem benötigten Füllvolumen eine Füllmenge von 750 g. Nach dem Entfernen der überschüssigen Beschichtungssuspension verblieb auf dem Tragkörper eine Beschichtungsmenge von 300 g, die nach Calcinierung eine Trockenmasse von 150 g ergab.

## Patentansprüche

1. Verfahren zum teilweisen Beschichten eines zylindrischen Tragkörpers mit einer Beschichtungssuspension, wobei der Tragkörper eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen ist und der Tragkörper mit einer gewünschten Beschichtungsmenge der Beschichtungssuspension beschichtet wird, indem seine Zylinderachse vertikal ausgerichtet und die Beschichtungssuspension durch die untere Stirnfläche in die Kanäle eingebracht wird,
**dadurch gekennzeichnet,**
**dass** der Tragkörper von der unteren Stirnfläche ausgehend mit einem Füllvolumen der Beschichtungssuspension gefüllt wird, welches so bemessen ist, dass der Tragkörper nur bis zu einer Höhe gefüllt wird, welche einen vorherbestimmten Bruchteil seiner Länge L ausmacht und dass überschüssige Beschichtungssuspension nach unten entfernt wird, so dass die gewünschte Beschichtungsmenge auf dem Tragkörper verbleibt.

2. Verfahren nach Anspruch 1,
**dadurch gekennzeichnet,**
**dass** das Füllvolumen mit Hilfe einer reversierbaren Dosierpumpe bemessen wird, die die Beschichtungssuspension in die Kanäle des Tragkörpers einpumpt und überschüssige Beschichtungssuspension durch Abpumpen aus den Kanälen entfernt.

3. Verfahren nach Anspruch 1,
**dadurch gekennzeichnet,**
**dass** das Füllvolumen mit Hilfe einer Dosierpumpe bemessen wird, die die Beschichtungssuspension in die Kanäle des Tragkörpers einpumpt und dass überschüssige Beschichtungssuspension durch Absaugen aus den Kanälen entfernt wird.

4. Verfahren nach Anspruch 1,
**dadurch gekennzeichnet,**
**dass** das Füllvolumen mit Hilfe eines Dosierventils bemessen wird, an dessen Eingang die Beschichtungssuspension unter einem Druck ansteht, wobei das Dosierventil aufgrund des Signals eines Sensors gesteuert wird, welches das Erreichen der gewünschten Beschichtungshöhe meldet und dass überschüssige Beschichtungssuspension durch Abpumpen aus den Kanälen entfernt wird.

5. Verfahren nach Anspruch 1,
**dadurch gekennzeichnet,**
**dass** das Füllvolumen mit Hilfe eines Dosierventils bemessen wird, an dessen Eingang die Beschichtungssuspension unter einem Druck ansteht, wobei das Dosierventil aufgrund des Signals eines Sensors gesteuert wird, welches das Erreichen der gewünschten Beschichtungshöhe meldet und dass überschüssige Beschichtungssuspension durch Absaugen aus den Kanälen entfernt wird.

6. Verfahren nach einem der Ansprüche 2 bis 5,
**dadurch gekennzeichnet,**
**dass** der Tragkörper aus Keramik oder Metall gefertigt ist.

7. Verfahren nach Anspruch 4 oder 5,
**dadurch gekennzeichnet,**
**dass** der Tragkörper aus Keramik gefertigt ist und ein kapazitiver Sensor verwendet wird, welcher in der gewünschten Höhe über der unteren Stirnfläche in einem Abstand zur Mantelfläche des Tragkörpers angeordnet ist.

8. Verfahren nach Anspruch 1,
**dadurch gekennzeichnet,**
**dass** die Geschwindigkeit, mit der die Beschichtungssuspension in den Tragkörper eingebracht wird, so bemessen wird, dass die gewünschte Beschichtungshöhe in weniger als einer Sekunde erreicht wird.

9. Verfahren nach Anspruch 1,
**dadurch gekennzeichnet,**
**dass** nach dem Entfernen der überschüssigen Beschichtungssuspension aus den Kanälen des Tragkörpers eventuell noch mit Beschichtungssuspension verstopfte Kanäle durch Absaugen oder Ausblasen mit Pressluft geöffnet werden.

10. Verfahren nach Anspruch 1,
**dadurch gekennzeichnet,**
**dass** die Beschichtung nach dem Entfernen der überschüssigen Beschichtungssuspension getrocknet und calciniert wird.

## Claims

1. A method for partially coating a cylindrical carrier body with a coating suspension wherein said carrier body comprises a cylinder axis, two end faces, a lateral surface and an axial length L and a plurality of channels extending from the first end face to the second end face, and said carrier body is coated with a desired coating amount of the coating suspension by vertically aligning the cylinder axis of said carrier body and introducing the coating suspension through the inferior end face into the channels,
**characterized in that**
the carrier body is filled starting from the inferior end face with a filling volume of the coating suspension which is metered such that the carrier body is only filled to a height being a predetermined portion of its length L, and that excess coating suspension is removed downward so that the desired coating amount remains on the carrier body.

2. The method according to claim 1,
**characterized in that**
the filling volume is metered by means of a reversible metering pump, which pumps the coating suspension into the channels of the carrier body and removes excess coating suspension from the channels by pumping.

3. The method according to claim 1,
**characterized in that**
the filling volume is metered by means of a metering pump, which pumps the coating suspension into the channels of the carrier body and removes excess coating suspension from the channels by suction.

4. The method according to claim 1,
**characterized in that**
the filling volume is metered by means of a metering valve having an inlet at which the coating suspension is under pressure wherein said metering valve is controlled on the basis of a sensor signal, which indicates when the desired coating height is reached, and excess coating suspension is removed from the channels by pumping.

5. The method according to claim 1,
**characterized in that**
the filling volume is metered by means of a metering valve having an inlet at which the coating suspension is under pressure wherein said metering valve is controlled on the basis of a sensor signal, which indicates when the desired coating height is reached, and excess coating suspension is removed from the channels by suction.

6. The method according to any one of claims 2 to 5,
**characterized in that**
the carrier body is made of a ceramic material or a metal material.

7. The method according to claim 4 or 5,
**characterized in that**
the carrier body is made of a ceramic material and a capacitive sensor is used which is arranged at the desired height above the inferior end face at a distance to the lateral surface of the carrier body.

8. The method according to claim 1,
**characterized in that**
the velocity at which the coating suspension is introduced into the carrier body, is determined such that the desired coating height is reached within less than 1 second.

9. The method according to claim 1,
**characterized in that**
any of the channels clogged with coating suspension, after removing the excess coating suspension from the channels of the carrier body, are opened by suction or by compressed air.

10. The method according to claim 1,
**characterized in that**
the coating is dried and calcined after removing the excess coating suspension.

## Revendications

1. Procédé de revêtement partiel d'un corps de support cylindrique par une suspension de revêtement, le corps de support présentant un axe de cylindre, deux surfaces frontales, une surface d'enveloppe et une longueur axiale L, en étant traversé depuis la première surface frontale vers la deuxième surface frontale par une multitude de canaux, et selon lequel le corps de support est revêtu par une quantité de revêtement souhaitée de la suspension de revêtement en plaçant son axe de cylindre à la verticale et en introduisant la suspension de revêtement par la surface frontale inférieure dans les canaux,
**caractérisé en ce que**
le corps de support est rempli depuis la surface frontale inférieure par un volume de remplissage de la suspension de revêtement qui est dimensionné de telle sorte que le corps de support n'est rempli que jusqu'à une hauteur qui représente une fraction prédéterminée de sa longueur L, et la suspension de revêtement excédentaire est évacuée vers le bas de telle sorte que la quantité de revêtement souhaitée reste sur le corps de support.

2. Procédé selon la revendication 1,
**caractérisé en ce que**
le volume de remplissage est dimensionné à l'aide d'une pompe de dosage réversible, qui pompe la suspension de revêtement dans les canaux du corps de support et évacue la suspension de revêtement excédentaire des canaux par pompage.

3. Procédé selon la revendication 1,
**caractérisé en ce que**
le volume de remplissage est dimensionné à l'aide d'une pompe de dosage, qui pompe la suspension de revêtement dans les canaux du corps de support, et la suspension de revêtement excédentaire est évacuée des canaux par aspiration.

4. Procédé selon la revendication 1,
**caractérisé en ce que**
le volume de remplissage est dimensionné à l'aide d'une soupape de dosage à l'entrée de laquelle la suspension de revêtement est présente sous pression, la soupape de dosage étant commandée par le signal d'un capteur qui signale l'atteinte de la hauteur de revêtement souhaitée, et la suspension de revêtement excédentaire est évacuée des canaux par pompage.

5. Procédé selon la revendication 1,
**caractérisé en ce que**
le volume de remplissage est dimensionné à l'aide d'une soupape de dosage à l'entrée de laquelle la suspension de revêtement est présente sous pression, la soupape de dosage étant commandée par le signal d'un capteur qui signale l'atteinte de la hauteur de revêtement souhaitée, et **en ce que** la suspension de revêtement excédentaire est évacuée des canaux par aspiration.

6. Procédé selon l'une quelconque des revendications 2 à 5,
**caractérisé en ce que**
le corps de support est réalisé en céramique ou en métal.

7. Procédé selon la revendication 4 ou 5,
**caractérisé en ce que**
le corps de support est réalisé en céramique et on utilise un capteur capacitif disposé à la hauteur souhaitée au-dessus de la surface frontale inférieure à une distance par rapport à la surface d'enveloppe du corps de support.

8. Procédé selon la revendication 1,
**caractérisé en ce que**
la vitesse à laquelle la suspension de revêtement est introduite dans le corps de support est dimensionnée de telle sorte que la hauteur de revêtement souhaitée est atteinte en moins d'une seconde.

9. Procédé selon la revendication 1,
**caractérisé en ce qu'**
après l'évacuation de la suspension de revêtement excédentaire des canaux du corps de support, des canaux éventuellement encore bouchés par la suspension de revêtement sont ouverts par aspiration ou soufflage d'air comprimé.

10. Procédé selon la revendication 1,
**caractérisé en ce qu'**
après l'évacuation de la suspension de revêtement excédentaire le revêtement est séché et calciné.
